(19) Europäisches Patentamt
European Patent Office
Office européen des brevets

(11) **EP 1 976 260 A2**

(12) **EUROPEAN PATENT APPLICATION**

(43) Date of publication:
**01.10.2008 Bulletin 2008/40**

(51) Int Cl.:
***H04N 1/40*** (2006.01)

(21) Application number: **08152949.7**

(22) Date of filing: **18.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.03.2007 KR 20070031038**

(71) Applicant: **Samsung Electronics Co., Ltd.**
**Suwon-si,**
**Gyeonggi-do 442-742 (KR)**
Designated Contracting States:
**DE FR GB NL**

(72) Inventor: **Hasegawa, Jun**
**Gyeonggi-do (KR)**

(74) Representative: **Waddington, Richard**
**Appleyard Lees**
**15 Clare Road**
**Halifax, Yorkshire HX1 2HY (GB)**

(54) **Image forming apparatus and control method thereof**

(57)    An image forming apparatus and a control method thereof expresses a color difference of a printed document when a color document is printed through the monochrome printing even if the printed document has the same brightness value. The image forming apparatus includes a brightness and chromatic value calculation unit (11) to calculate a brightness value and first and second chromatic values of a pixel, an edge determination unit (18) to determine whether the calculated brightness value and first and second chromatic values represent edgeness of the pixel, a degeneracy determination unit (19) to determine degeneracy of the pixel, a halftone screen pattern unit (13) to store first and second halftone screen patterns having first and second threshold values, and a binarization processing unit (14) to perform binarization processing by comparing the first and second threshold values with the brightness value according to the degeneracy of the pixel.

FIG. 2

EP 1 976 260 A2

**Description**

BACKGROUND OF THE INVENTION

1. Field of the Invention

The present general inventive concept relates to an image forming apparatus and a control method thereof. More particularly, the present general inventive concept relates to an image forming apparatus and a control method thereof, capable of expressing a color difference of a printed document when a color document is printed through monochrome printing even if the printed document has a same brightness value.

2. Description of the Related Art

In general, when document data are printed in an image forming apparatus, such as an inkjet printer or a laser printer, multilevel color pixels must be converted into binary monochrome pixels. Such a conversion process is referred to as a halftoning process.

According to the halftoning process, multilevel color pixels are converted into binary monochrome pixels by using predetermined threshold value patterns. In addition, a printer is generally equipped with a toner printing mode or an ink printing mode, so color input data must be converted to have binary monochrome pixel values, that is, monochrome 1-bit values that represent dots only.

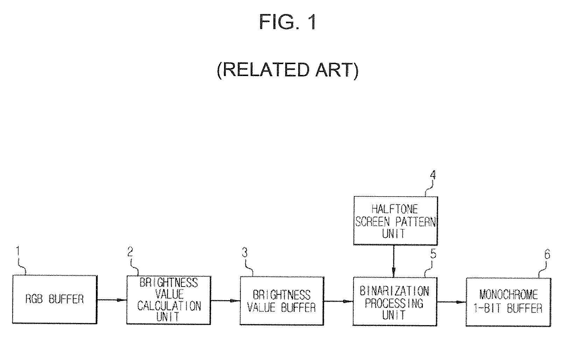

FIG. 1 is a schematic block view illustrating a conventional image forming apparatus. Referring to FIG. 1, the conventional image forming apparatus includes a Red Green Blue (RGB) buffer 1, a brightness value calculation unit 2 to calculate the brightness value based on the RGB value of the RGB buffer 1, a brightness value buffer 3 for storing the calculated brightness value, a halftone screen pattern unit 4 in which predetermined halftone screen patterns are stored to use the halftone screen patterns as threshold values when multilevel input data are converted into binary data, a monochrome 1-bit buffer 6 for storing output data processed as binary data, and a binarization processing unit 5.

The brightness value calculation unit 2 calculates the brightness value using equation 1 described below.

$$\text{Brightness value} = 0.311*(\text{red value})+0.626*(\text{green value})+0.063*(\text{blue value})....(1)$$

Based on equation 1, the color of each pixel is converted corresponding to the gray color that is an achromatic color. At this time, color information is completely lost.

The halftone screen pattern unit 4 sets a predetermined halftone screen pattern array as HT and a size of the halftone screen pattern array is determined with reference to an integer type two-dimensional array, in which the direction of the first script is set as M and the direction of the second script is set as N. The threshold value Th is obtained according to equation 2 on a basis of the X-Y coordinate (x and y) of the corresponding pixel, which is defined by positive integers.

$$\text{Th}=\text{HT}[y\%M] \ [x\%Y] .......(2)$$

In equation 2, HT is a function for selecting the threshold value from the halftone screen pattern array, and % is an operator for obtaining a remaining value.

The binarization processing unit 5 binarizes the brightness value buffer with reference to the predetermined halftone screen pattern. That is, after obtaining the threshold value of the predetermined halftone screen pattern using the X-Y coordinate value of the corresponding pixel as an index, the binarization processing unit 5 compares the brightness value of the pixel with the threshold value. If the brightness value is equal to the threshold value or less, the binarization processing unit 5 outputs a dot value "1" to the monochrome 1-bit buffer 6. In addition, if the brightness value exceeds the threshold value, the binarization processing unit 5 outputs a dot value "0". The dot value "1" refers to that the dot is printed, and the dot value "0" refers to that the dot is not printed.

The dot value output from the binarization processing unit 5 is recorded in a pixel positioned corresponding to X-Y coordinate value in the monochrome 1-bit buffer 6. The X-Y coordinate value is changed to sequentially scan all pixels in the RGB buffer and the above procedure is repeated to process all pixels in the RGB buffer.

However, the conventional image forming apparatus cannot express a color difference in a printed document when a color document is printed through monochrome printing because a same dot pattern is formed when the printed document has a same brightness value.

## SUMMARY OF THE INVENTION

The present general inventive concept provides an image forming apparatus and a control method thereof, capable of expressing a color difference of a printed document when a color document is printed through monochrome printing even if the printed document has a same brightness value.

Additional aspects and/or utilities of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

According to an aspect of the invention there is provided an image forming apparatus to binarize a Red Green Blue, RGB, value into a monochrome 1-bit value, the image forming apparatus including a brightness and chromatic value calculation unit to calculate a brightness value and first and second chromatic values of a pixel based on the RGB value, an edge determination unit to determine whether the calculated brightness value and first and second chromatic values represent edgeness of the pixel, a degeneracy determination unit to determine degeneracy of the pixel based on the determination result of the edge determination unit, a halftone screen pattern unit to store first and second halftone screen patterns having first and second threshold values different from each other; and a binarization processing unit to perform binarization processing by comparing the first and second threshold values with the brightness value according to the degeneracy of the pixel.

According to another aspect of the invention there is provided an image forming apparatus to binarize a Red Green Blue, RGB, value into a monochrome 1-bit value, the image forming apparatus including a brightness and chromatic value calculation unit to calculate a brightness value and first and second chromatic values of a pixel based on the RGB value, a degeneracy determination unit to determine degeneracy of the pixel based on the calculated brightness value and first and second chromatic values of the pixel, and a binarization processing unit to perform binarization processing by selectively using halftone screen patterns having threshold values different from each other according to the degeneracy of the pixel.

According to another aspect of the invention there is provided a method of controlling an image forming apparatus to binarize a Red Green Blue, RGB, value into a monochrome 1-bit value, the method including calculating a brightness value and first and second chromatic values of a pixel based on the RGB value, determining whether the calculated brightness value and first and second chromatic values represent edgeness or non-edgeness of the pixel, determining degeneracy of the pixel based on the calculated brightness value and first and second chromatic values of the pixel, and performing a binarization processing by comparing a first threshold value of a first halftone screen pattern with the brightness value when the pixel represents the degeneracy, and by comparing a second threshold value of a second halftone screen pattern with the brightness value when the pixel represents no degeneracy.

According to another aspect of the invention there is provided an image forming apparatus including a halftone screen pattern unit to store a first halftone screen pattern having a first threshold value and a second halftone screen pattern having a second threshold value different from the first threshold value, and a binarization processing unit to perform binarization processing by comparing at least one of the first and second threshold values with a brightness value based on a degeneracy status of a pixel, wherein one of the first threshold value and the second threshold value is compared with the brightness value when the pixel has no degeneracy and an other of the first threshold value and the second threshold value is compared with the brightness value when the pixel has degeneracy.

The first threshold value can be HT[y%M] [x%N], and the second threshold value can be HT[(y+dy)%M] [(x+dx)%N], wherein HT is a function to select the threshold value from a halftone screen pattern array, % is an operator to obtain a remaining value, xy is an X-Y coordinate of the pixel and dx and dy are positive integers which are set by taking a dot arrangement of the halftone screen pattern into consideration.

A shifted halftone screen pattern can be applied to boundary sections between colors having a same brightness value when a color document is printed through monochrome printing.

According to another aspect of the invention there is provided an image forming method including storing a first halftone screen pattern having a first threshold value and a second halftone screen pattern having a second threshold value different from the first threshold value, determining a degeneracy status of a pixel, and performing binarization processing by comparing at least one of the first and second threshold values with a brightness value based on the degeneracy status of the pixel.

The performing binarization processing may further include comparing one of the first threshold value and the second threshold value with the brightness value when the pixel has no degeneracy, and comparing an other of the first threshold value and the second threshold value with the brightness value when the pixel has degeneracy.

According to another aspect of the invention there is provided a computer-readable recording medium having embodied thereon a computer program to execute a method, wherein the method includes storing a first halftone screen pattern having a first threshold value and a second halftone screen pattern having a second threshold value different from the first threshold value, determining a degeneracy status of a pixel, and performing binarization processing by comparing at least one of the first and second threshold values with a brightness value based on the degeneracy status of the pixel.

## BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a schematic block view illustrating a conventional image forming apparatus;

FIG. 2 is a schematic block view illustrating an image forming apparatus according to an embodiment of the present general inventive concept;

FIG. 3 is a view illustrating an example of a Laplacian filter used in an edge determination unit illustrated in FIG. 2; and

FIG. 4 is a flowchart illustrating a method to control an image forming apparatus according to an embodiment of the present general inventive concept.

## DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

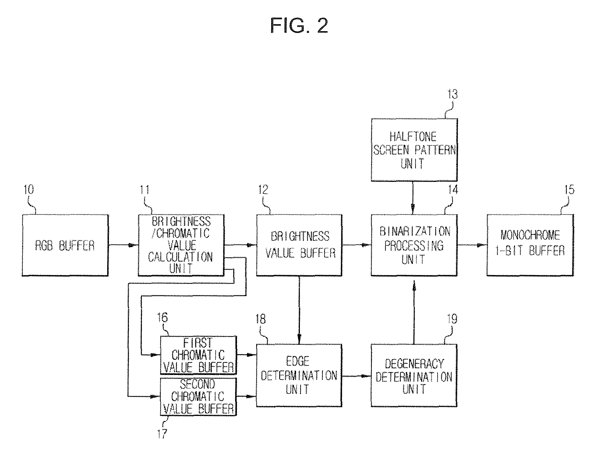

FIG. 2 is a schematic block view illustrating an image forming apparatus according to an embodiment of the present general inventive concept. Referring to FIG. 2, the image forming apparatus of an embodiment of the present general inventive concept includes a Red Green Blue (RGB) buffer 10, a brightness/chromatic value calculation unit 11, a brightness value buffer 12, a first chromatic value buffer 16, a second chromatic value buffer 17, an edge determination unit 18, a degeneracy determination unit 19, a halftone screen pattern unit 13, a binarization processing unit 14, and a monochrome 1-bit buffer 15.

The RGB buffer 10 stores RGB values having specific resolutions. The RGB values are created according to content of document data to be printed, and 24-bits are used for each pixel.

The brightness/chromatic value calculation unit 11 calculates the brightness value, the first chromatic value and the second chromatic value of the pixel based on the RGB value of the RGB buffer 10.

The brightness/chromatic value calculation unit 11 calculates the brightness value using equation 1 described above.

Based on equation 1, the color of each pixel is converted corresponding to the gray color that is an achromatic color. At this time, color information is completely lost.

For instance, the first and second chromatic values calculated by the brightness/chromatic value calculation unit 11 include the Cb (blue chrominance component) value and the Cr (red chrominance component) value, which are chrominance component values in the YCC (YCbCr) color space, or a and b which are color components in the Lab color space. The YCC color space is a color expression system, which is created based on eyes of humans being sensitive to the brightness signal and insensitive to the color signals. The YCC color space includes Y representing the brightness, Cb representing the chrominance component of blue, and Cr representing the chrominance component of red. The Y, Cb and Cr are determined according to the RGB values. The Lab color space is a color representation system standardized by the CIE (Commission Internationale d' Eclairage), the international commission on illumination. The Lab color space includes a color component (a) that represents the color range from green to red and a color component (b) that represents the color range from blue to yellow on a center of a disc having an axis of luminance L. Each L, a and b is determined according to the RGB values.

The brightness value buffer 12 stores the brightness value calculated by the brightness/chromatic value calculation unit 11 and 8-bits are used for each pixel.

The first chromatic value buffer 16 stores the first chromatic value calculated by the brightness/chromatic value calculation unit 11.

The second chromatic value buffer 17 stores the second chromatic value calculated by the brightness/chromatic value calculation unit 11.

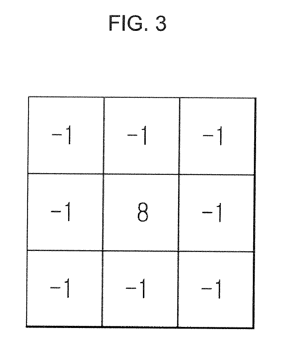

The edge determination unit 18 adopts a high-pass filter for the brightness value buffer 12, the first chromatic value buffer 16 and the second chromatic value buffer 17 to determine the edge degree of each pixel as numerical values. The edge determination unit 18 compares the edge degree with the predetermined threshold value, thereby performing the edge determination. In detail, the two-dimensional numeric array known as a Laplacian filter of FIG. 3 is multiplied by a corresponding pixel position and an adjacent pixel position of each buffer and the values thereof are added to each other. The value obtained through the above procedure is represented as a great negative value or a great positive value when a pixel position of a pixel is significantly changed in each buffer and is represented as a negative value or a positive value approaching zero when the pixel position of the pixel is not changed or smoothly changed. Therefore, if a value obtained using the Laplacian filter is set as V, an absolute value of V is compared with a predetermined threshold value T. If the absolute value of V is equal to or less than the threshold value T, "non-edgeness of pixel" is determined. In addition, if the absolute value of V exceeds the threshold value T, "edgeness of pixel" is determined. In this manner, the edge determination unit 18 performs the edge determination based on the brightness value, the first chromatic value and the second chromatic value of the corresponding pixel and sends the result to the degeneracy determination unit 19.

The degeneracy determination unit 19 determines the degeneracy if a determination is made by the edge determination unit 18 that the brightness value represents "non-edgeness" and the first and second chrominance values represent "edgeness." The degeneracy determination unit 19 sends the result to the binarization processing unit. The term "degeneracy" refers to the status that different colors have a same brightness value when the colors are converted through the monochrome 1-bit conversion.

The halftone screen pattern unit 13 stores a halftone screen pattern array, which is fixed data required for binarization processing and in which different threshold values are preset. The halftone screen pattern array is prepared in a form of the integer type two-dimensional array. The integer values, which are array factors, are used as threshold values Th when multilevel input data are converted into binary data.

The binarization processing unit 14 performs two types of binarization processing according to existence of degeneracy. In an embodiment of the present general inventive concept, if the pixel has no degeneracy, conventional binarization processing can be performed according to equation 3. Alternatively, in an other embodiment of the present general inventive concept, if the pixel has no degeneracy, binarization processing can be performed according to equation 4.

$$\text{First threshold value Th1} = HT[y\%M]\,[x\%N] \quad\text{........(3)}$$

In the present embodiment, if the pixel has degeneracy, the binarization processing is performed according to equation 4. Alternatively, in the other embodiment of the present general inventive concept, if the pixel has degeneracy, binarization processing can be performed according to equation 3.

$$\text{Second threshold value Th2} = HT[(y+dy)\%M]\,[(x+dx)\%N] \quad\text{........(4)}$$

In equation 4, HT is a function to select the threshold value from the halftone screen pattern array, % is an operator to obtain a remaining value, and dx and dy are positive integer values which are set by taking a dot arrangement of the halftone screen pattern into consideration.

Equation 4 represents that the screen pattern is shifted by -dx and -dy in the X-Y coordinate. In detail, if the displacement between dots of the halftone screen pattern is 3 in the X coordinate and 3 in the Y coordinate, an integer value 1, which does not exceed a half of 3 can be used. However, basically, the integer value can be variously selected as long as the dot arrangement of the halftone screen pattern is not overlapped on a same position after the shift operation.

If the pixel to be binarized in the brightness buffer has no degeneracy, the binarization processing unit 14 compares the first threshold value Th1 with the brightness value, thereby performing the binarization processing. In addition, if the pixel to be binarized represents degeneracy, the binarization processing unit 14 compares the second threshold value Th2 with the brightness value, thereby performing the binarization processing. At this time, if the brightness value is equal to or less than the threshold value Th1 or Th2, the dot value "1" is output. In addition, if the brightness value exceeds the threshold value Th1 or Th2, the dot value "0" is output. The dot value "1" refers to that the dot is printed, and the dot value "0" refers to that the dot is not printed.

In the present embodiment, if the pixel represents no degeneracy, the binarization processing unit 14 performs the binarization processing by adopting the normal halftone screen pattern that is not shifted, and, if the pixel has degeneracy, the binarization processing unit 14 performs the binarization processing by adopting the shifted halftone screen pattern. Alternatively, in the other embodiment, if the pixel represents degeneracy, the binarization processing unit 14 performs the binarization processing by adopting the normal halftone screen pattern that is not shifted, and, if the pixel has no degeneracy, the binarization processing unit 14 performs the binarization processing by adopting the shifted halftone screen pattern.

Accordingly, different from the conventional image forming apparatus, which cannot express a color difference in a printed document when a color document is printed through the monochrome printing because a same dot pattern is formed when the printed document has a same brightness value, the present general inventive concept can intentionally generate mismatch of the halftone screen pattern so that the boundary between different colors can be expressed in the printed document.

The monochrome 1-bit buffer 15 stores the dot value output from the binarization processing unit 14 in the pixel position corresponding to the X-Y coordinate value. Since the dot value represents existence of the dot output in each X-Y coordinate, 1-bit is used for each pixel.

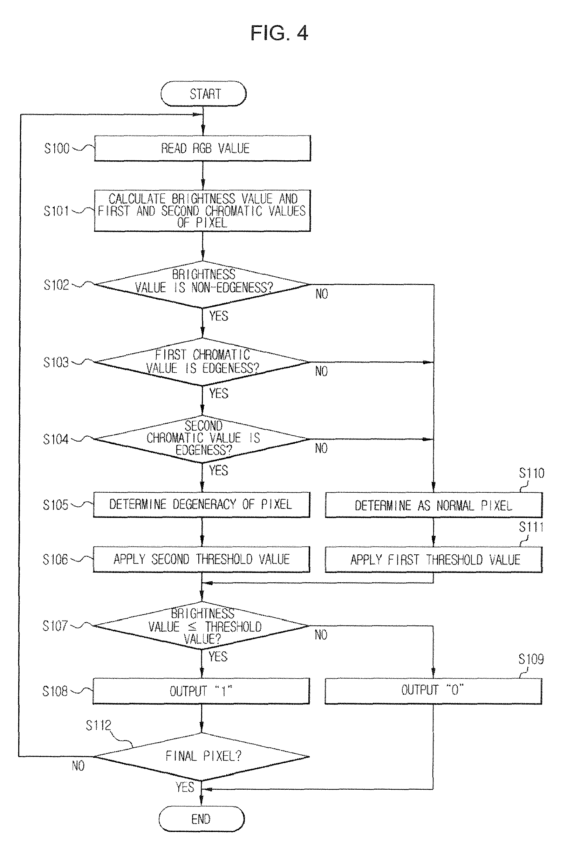

Hereinafter, a method of operating the image forming apparatus will be described with reference to FIG. 4. The image forming apparatus reads the RGB value corresponding to the pixel positioned in a specific X-Y coordinate from the RGB value buffer receiving color data consisting of 24-bit RGB (operation S100).

The brightness value, the first chromatic value, and the second chromatic value of the pixel are calculated based on the RGB value. The calculated brightness value, first chromatic value, and second chromatic value are stored in the brightness value buffer 12, the first chromatic value buffer 16 and the second chromatic value buffer 17, respectively.

In addition, in operations 102 to 104, a determination is made whether the brightness value represents the non-edgeness of the pixel and whether the first and second chromatic values represent the edgeness of the pixel.

If a determination is made in operations 102 to 104 that the brightness value represents the non-edgeness of the pixel and the first and second chromatic values represent the edgeness of the pixel, a determination is made in operation 105 that the pixel has degeneracy. Thus, the second threshold value Th2 = HT[(y+dy)%M] [(x+dx)%N] is employed when performing the binarization processing using the shifted halftone screen pattern.

In contrast, if a determination is made in operations 102 to 104 that the brightness value represents the edgeness of the pixel, and the first and second chromatic values represent the non-edgeness of the pixel, a determination is made in operation 110 that the pixel has no degeneracy. Thus, the first threshold value Th1 = HT[y%M] [x%N] is employed when performing the binarization processing using the normal halftone screen pattern.

In operation 107, the brightness value is compared with the threshold value Th1 or Th2. If the brightness value is equal to or less than the threshold value Th1 or Th2, the dot value "1" is output. In addition, if the brightness value exceeds the threshold value Th1 or Th2, the dot value "0" is output. The dot value is stored in the monochrome 1-bit buffer 16 corresponding to the X-Y coordinate value.

After the binarization processing has been performed, a determination is made whether the present pixel is the final pixel (operation 112). If the present pixel is not the final pixel, the procedure returns to operation S100 to sequentially scan other pixels in the RGB buffer, thereby completing the binarization processing relative to all pixels. Meanwhile, if the present pixel is the final pixel, the halftoning process is completed and then the monochrome printing is performed according to information stored in the monochrome 1-bit buffer by a print engine while supplying toner to a recording paper.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

As described above, the conventional image forming apparatus cannot express a color difference in a printed document when a color document is printed through monochrome printing because a same dot pattern is formed when the printed document has a same brightness value. However, various embodiments of the present general inventive concept can express the color difference in the printed document using information of an original color when the color document is printed through the monochrome printing. That is, the present general inventive concept applies the shifted halftone screen pattern to boundary sections between colors having a same brightness value when the color document is printed through the monochrome printing such that different threshold values are employed for the boundary sections.

Accordingly, a mismatch of the halftone screen pattern is intentionally produced. Accordingly, the boundary sections between colors can be expressed in the printed document.

Although various embodiments of the present general inventive concept have been illustrated and described, it would be appreciated by those skilled in the art that changes may be made in these embodiments without departing from the principles and spirit of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus to binarize a Red Green Blue,RGB, value into a monochrome 1-bit value, the image forming apparatus comprising:

   a brightness and chromatic value calculation unit (11) to calculate a brightness value and first and second chromatic values of a pixel based on the RGB value;
   an edge determination unit (18) to determine whether the calculated brightness value and first and second chromatic values represent edgeness of the pixel;
   a degeneracy determination unit (19) to determine degeneracy of the pixel based on the determination result of the edge determination unit (18);
   a halftone screen pattern unit (13) to store first and second halftone screen patterns having first and second threshold values different from each other; and
   a binarization processing unit (14) to perform binarization processing by comparing the first and second threshold values with the brightness value according to the degeneracy of the pixel.

2. The image forming apparatus of claim 1, wherein the binarization processing unit (14) compares the first threshold value of the first halftone screen pattern with the brightness value to perform the binarization processing when the pixel has no degeneracy, and compares the second threshold value of the second halftone screen pattern with the brightness value to perform the binarization processing when the pixel represent the degeneracy.

3. The image forming apparatus of claim 2, wherein the binarization processing unit (14) outputs a dot value "1" if the brightness value is equal to or less than the first threshold value or the second threshold value, and outputs a dot value "0" if the brightness value exceeds the first threshold value or the second threshold value.

4. The image forming apparatus of claim 3, wherein the first threshold value is HT[y%M] [x%N] and the second threshold value is HT[(y+dy)%M] [(x+dx)%N], wherein HT is a function to select the threshold value from a halftone screen pattern array, % is an operator to obtain a remaining value, xy is an X-Y coordinate of the pixel and dx and dy are positive integers which are set by taking a dot arrangement of the halftone screen pattern into consideration.

5. The image forming apparatus of any preceding claim, wherein the degeneracy determination unit (19) determines the degeneracy of the pixel when the brightness value of the pixel represents non-edgeness of the pixel and the first and second chromatic values represent edgeness of the pixel.

6. The image forming apparatus of any preceding claim, wherein the first and second chromatic values comprise a Cb value and a Cr value in a YCC color space, respectively, in which the YCC color space includes Y representing brightness, Cb representing blue chrominance component and Cr representing red chrominance component.

7. The image forming apparatus of any preceding claim, wherein the first and second chromatic values comprise a color component (a) that represents a color range from green to red and a color component (b) that represents a color range from blue to yellow on a center of a disc having an axis of luminance L.

8. An image forming apparatus to binarize a Red Green Blue, RGB, value into a monochrome 1-bit value, the image forming apparatus comprising:

> a brightness and chromatic value calculation unit (11) to calculate a brightness value and first and second chromatic values of a pixel based on the RGB value;
> a degeneracy determination unit (19) to determine degeneracy of the pixel based on the calculated brightness value and first and second chromatic values of the pixel; and
> a binarization processing unit (14) to perform binarization processing by selectively using halftone screen patterns having threshold values different from each other according to the degeneracy of the pixel.

9. The image forming apparatus of claim 8, wherein the degeneracy determination unit (19) determines the degeneracy of the pixel when the brightness value of the pixel represents non-edgeness of the pixel and the first and second chromatic values represent edgeness of the pixel.

10. The image forming apparatus of claim 9, wherein the first and second chromatic values comprise a Cb value and a Cr value in a YCC color space, respectively, in which the YCC color space includes Y representing brightness, Cb representing blue chrominance component and Cr representing red chrominance component.

11. The image forming apparatus of claim 9, wherein the first and second chromatic values comprise a color component (a) that represents a color range from green to red and a color component (b) that represents a color range from blue to yellow on a center of a disc having an axis of luminance L.

12. A method of controlling an image forming apparatus to binarize a Red Green Blue, RGB, value into a monochrome 1-bit value, the method comprising:

> calculating a brightness value and first and second chromatic values of a pixel based on the RGB value;
> determining whether the calculated brightness value and first and second chromatic values represent edgeness or non-edgeness of the pixel;
> determining degeneracy of the pixel based on the calculated brightness value and first and second chromatic values of the pixel; and
> performing a binarization processing by comparing a first threshold value of a first halftone screen pattern with the brightness value when the pixel represents the degeneracy, and by comparing a second threshold value of a second halftone screen pattern with the brightness value when the pixel represents no degeneracy.

13. The method of claim 12, wherein a determination is made that the pixel has the degeneracy when the brightness value of the pixel represents non-edgeness of the pixel and the first and second chromatic values represent edgeness of the pixel.

14. The method of claim 13, wherein the first and second chromatic values comprise a Cb value and a Cr value in a YCC color space, respectively, in which the YCC color space includes Y representing brightness, Cb representing blue chrominance component and Cr representing red chrominance component.

15. The method of claim 13, wherein the first and second chromatic values comprise a color component (a) that represents a color range from green to red and a color component (b) that represents a color range from blue to yellow on a center of a disc having an axis of luminance L.

16. An image forming apparatus, comprising:

> a halftone screen pattern unit (13) to store a first halftone screen pattern having a first threshold value and a second halftone screen pattern having a second threshold value different from the first threshold value; and
> a binarization processing unit (14) to perform binarization processing by comparing at least one of the first and second threshold values with a brightness value based on a degeneracy status of a pixel,

wherein one of the first threshold value and the second threshold value is compared with the brightness value when the pixel has no degeneracy and another of the first threshold value and the second threshold value is compared with the brightness value when the pixel has degeneracy.

17. The image forming apparatus of claim 16, wherein:

the first threshold value is HT[y%M] [x%N]; and
the second threshold value is HT[(y+dy)%M] [(x+dx)%N],

wherein HT is a function to select the threshold value from a halftone screen pattern array, % is an operator to obtain a remaining value, xy is an X-Y coordinate of the pixel and dx and dy are positive integers which are set by taking a dot arrangement of the halftone screen pattern into consideration.

18. The image forming apparatus of claim 16, wherein a shifted halftone screen pattern is applied to boundary sections between colors having a same brightness value when a color document is printed through monochrome printing.

19. An image forming method, comprising:

storing a first halftone screen pattern having a first threshold value and a second halftone screen pattern having a second threshold value different from the first threshold value;
determining a degeneracy status of a pixel; and
performing binarization processing by comparing at least one of the first and second threshold values with a brightness value based on the degeneracy status of the pixel.

20. The method of claim 19, wherein the performing binarization processing further comprising:

comparing one of the first threshold value and the second threshold value with the brightness value when the pixel has no degeneracy; and
comparing an other of the first threshold value and the second threshold value with the brightness value when the pixel has degeneracy.

21. A computer-readable recording medium having embodied thereon a computer program to execute a method, wherein the method comprises:

storing a first halftone screen pattern having a first threshold value and a second halftone screen pattern having a second threshold value different from the first threshold value;
determining a degeneracy status of a pixel; and
performing binarization processing by comparing at least one of the first and second threshold values with a brightness value based on the degeneracy status of the pixel.

FIG. 1

(RELATED ART)

```
                                                    ┌──────────────┐  4
                                                    │   HALFTONE   │
                                                    │SCREEN PATTERN│
                                                    │     UNIT     │
                                                    └──────┬───────┘
  1            2             3                5      │      6
┌─────────┐ ┌──────────┐ ┌──────────┐ ┌──────────┐ │ ┌──────────┐
│         │ │BRIGHTNESS│ │          │ │BINARIZATION│ │MONOCHROME│
│RGB BUFFER│→│  VALUE  │→│BRIGHTNESS│→│PROCESSING │→│1-BIT BUFFER│
│         │ │CALCULATION│ │VALUE BUFFER│ │   UNIT   │ │          │
│         │ │   UNIT   │ │          │ │          │ │          │
└─────────┘ └──────────┘ └──────────┘ └──────────┘   └──────────┘
```

FIG. 2

FIG. 3

| | | |
|:-:|:-:|:-:|
| −1 | −1 | −1 |
| −1 | 8 | −1 |
| −1 | −1 | −1 |

## FIG. 4

START

S100 — READ RGB VALUE

S101 — CALCULATE BRIGHTNESS VALUE AND FIRST AND SECOND CHROMATIC VALUES OF PIXEL

S102 — BRIGHTNESS VALUE IS NON-EDGENESS?
— NO
YES

S103 — FIRST CHROMATIC VALUE IS EDGENESS?
— NO
YES

S104 — SECOND CHROMATIC VALUE IS EDGENESS?
— NO
YES

S105 — DETERMINE DEGENERACY OF PIXEL

S110 — DETERMINE AS NORMAL PIXEL

S106 — APPLY SECOND THRESHOLD VALUE

S111 — APPLY FIRST THRESHOLD VALUE

S107 — BRIGHTNESS VALUE ≤ THRESHOLD VALUE?
— NO
YES

S108 — OUTPUT "1"

S109 — OUTPUT "0"

S112 — FINAL PIXEL?
NO
YES

END